# EUROPEAN PATENT APPLICATION

(11) **EP 2 395 384 A1**
(43) Date of publication of application: **14.12.2011**
(21) Application number: 09839743.3
(22) Date of filing: 18.05.2009
(51) Int. Cl.: G02C 1/02

(54) **LENS-FIXING APPARATUS FOR RIMLESS SPECTACLES**

(30) Priority: 03.02.2009 KR 20090008487
(71) Applicant: Hwang Bo, Hak, Daegu 702-220 (KR); Hwang Bo, Won Il, Daegu 704-120 (KR)
(72) Inventor: Hwang Bo, Hak, Daegu 702-220 (KR); Hwang Bo, Won Il, Daegu 704-120 (KR)
(74) Representative: Sajda, Wolf E.
(86) International application number: PCT/KR2009/002623
(87) International publication number: WO 2010/090376

(57) **Abstract**

Provided is a lens-fixing apparatus (100) for rimless spectacles, which provides a comfortable wearing sensation while reducing costs and assembly procedures, and providing aesthetically pleasing and elegant design, thus improving the quality of rimless spectacles and strengthening the competitiveness thereof in domestic and global markets. The lens-fixing apparatus (100) for rimless spectacles includes hinges (103) having legs (101) at the rear portions thereof and which are connected to each lens (102), respectively and bolts (105) and nuts (106) for fastening the lenses (102) to a nose frame (104) which interconnects the lenses (102), wherein each of said bolts (105) has a bolt body (109) that integrally protrudes from one or both sides of the hinge body (107) of the hinge (103), and from one or both sides of the nose frame body of the nose frame (104), and said bolt body (105) is threaded through a post-processing so as to be coupled with the nut, thereby fastening the lenses (102) of the rimless spectacles together.

## Description

### BACKGROUND OF THE INVENTION

### 1. Field of the Invention

The present invention relates to a lens-fixing apparatus for rimless spectacles, and more particularly, to a lens-fixing apparatus which is improved to easily fix lenses to legs or the lenses to a bridge.

### 2. Description of the Prior Art

In general spectacles, hinges and a nose frame are fixed to both sides and central portions of a frame on which lenses are installed, through a method such as welding. Also, a front end of each of legs is coupled to a rear end of each of the hinges to provide the foldable leg.

As described above, rimless spectacles were developed to further enhance an aesthetic beyond a range of the frame spectacles and provide a comfortable wearing sensation due to the lightweight thereof. Thus, the rimless spectacles has a structure in which the nose frame and the hinges on which the legs are respectively installed are coupled to each other using bolts and nuts on the central portions and both sides of the lenses.

A great variety of fixing apparatuses for fixing the lenses of the rimless spectacles to the nose frame or fixing the lenses to the legs is being developed. The same applicant as this application has a previously granted patent (Korean Patent Application No. 877762), and this will be described below with reference to FIG. 5.

A lens-fixing apparatus according to a related art includes a hinge 3 including a leg 2 at a rear side thereof, a bolt 6 welded to a nose frame 5 connecting central portions of lenses 4 to each other, and a nut coupled to the bolt 6 to fasten the lenses 4.

The bolts 6 include a bolt body 10 having a thread 9 and are disposed on each of both sides of a base 8 having a plate shape. The nut 7 includes a nut body 12 having a coupling hole 11 so as to be coupled to the bolt body 10.

A head 13 having a hexagonal shape is integrally formed on an end of the nut body 12. A bridge 14 is disposed between the head 13 and the head 13 so that the heads 13 are easily cut to separate the two nuts 7 from each other when the lenses are exchanged.

### SUMMARY OF THE INVENTION

In the related art as described above, since the hinge connected to the leg and the bolt for fixing the lens to the nose frame are separately provided, manufacturing processes are complicated due to a large number of parts. Also, since each of the bolt and nut has a small size of about several millimeters (mm), it is difficult to manage parts due to the losing of the parts by an omission and separation of the parts in the assembling process.

Since the bolts having a small size are fixed to the hinge and nose frame through welding, the welding process may not be easy. Also, since the welded portion may be weakened by heat generated in the welding process, the welded portion may be easily deformed or the welded bolt may be separated during the wearing of the spectacles.

That is, since each of the parts is minimized in thickness and size to reduce to a weight thereof so as to improve the wearing sensation, the parts may be more easily deformed by the heat generated in the welding process.

When each of the parts is increased in thickness and size so as to prevent the parts from being thermally deformed in the welding process, the resistance against the thermal deformation may be satisfied. However, the wearing sensation may be deteriorated due to the increase of the weight. In addition, the design of the product may be crude to reduce the qualities of the product and design and increase usage of raw materials. Thus, the manufacturing costs may be increased to weaken the competitiveness thereof in domestic and global markets.

Also, an ancillary part such as a groove may be provided to more firmly weld the bolt to the hinge and nose frame. Also, since many processes such as the manufacturing of the bolt, the formation of the groove in the hinge and the nose frame, and the welding may be additionally performed, the manufacturing costs may be increased and the manufacturing processes may be complicated to reduce the productivity.

Also, since the welded portions of the hinge to which the bolt is welded and the nose frame may be expressed to the outside, an outer appearance thereof may be deteriorated. Also, since each of the parts is very small in size, it may be difficult to perform a process for removing the welding mark. Thus, there is a limitation that it is difficult to realize aesthetically pleasing and elegant design.

According to an embodiment, a lens-fixing apparatus for rimless spectacles includes: hinges having legs at the rear portions thereof and which are connected to each lens, respectively; and bolts and nuts for fastening the lenses to a nose frame which interconnects the lenses.

Each of the bolts has a bolt body that integrally protrudes from one or both sides of a hinge body of the hinge, and from one or both sides of a nose frame body of the nose frame, and the bolt body is threaded through a post-processing so as to be coupled with the nut, thereby fastening the lenses of the rimless spectacles together.

Therefore, the lens-fixing apparatus for rimless spectacles provides a comfortable wearing sensation while reducing costs and assembly procedures, and providing aesthetically pleasing and elegant design, thus improving the quality of rimless spectacles and strengthening the competitiveness thereof in domestic and global markets.

According to the present invention, the bolt for fixing the lens constituting the rimless spectacles may be integrally formed with the hinge and the nose frame to significantly reduce the whole production and assembly procedures, thereby improving productivity and reducing manufacturing costs.

In addition, the raw material may be decreased in size and design variability may be improved to provide the comfortable wearing sensation and the aesthetically pleasing and elegant design, thus improving the quality of rimless spectacles.

### BRIEF DESCRIPTION OF THE DRAWINGS

Exemplary embodiments can be understood in more detail from the following description taken in conjunction with the accompanying drawings, in which:

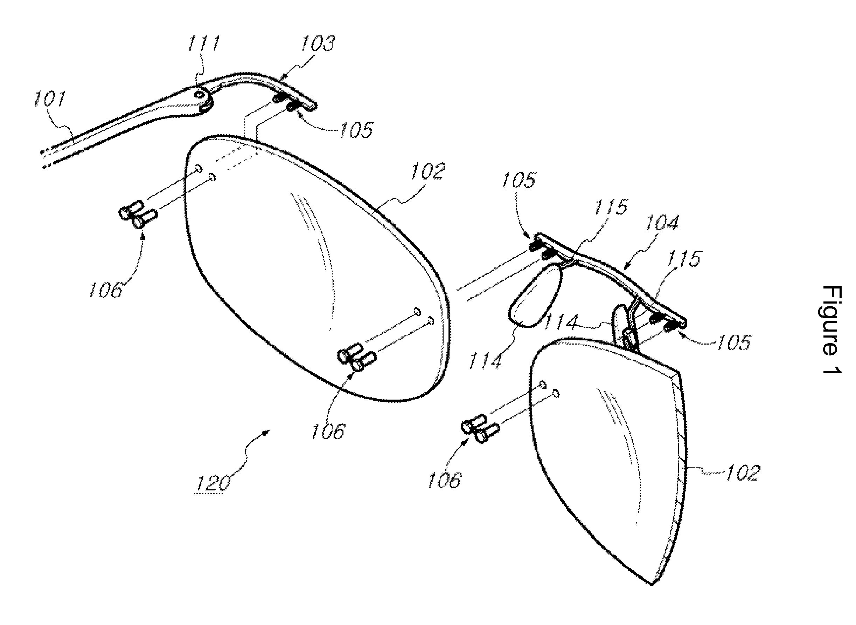

- FIG. 1: is an exploded perspective view of a lens-fixing apparatus for rimless spectacles according to an embodiment;

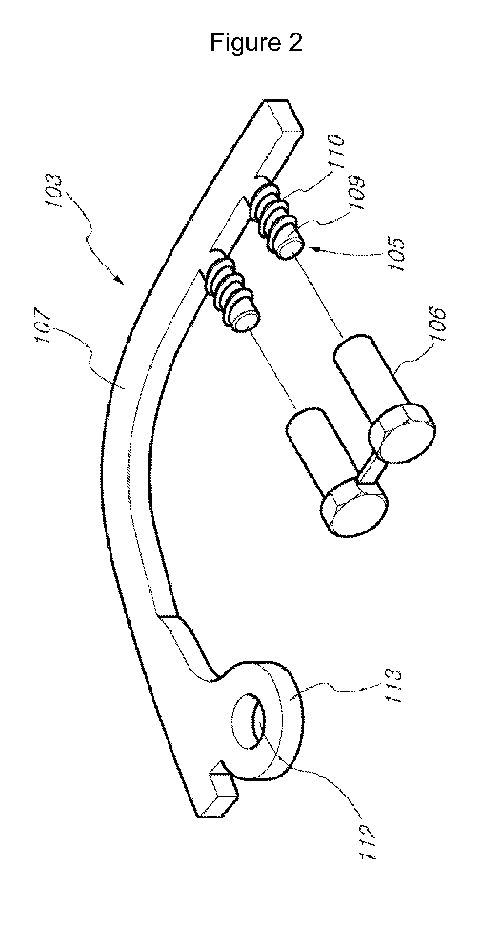

- FIG. 2: is a perspective view of a bolt-integrated hinge and nut of a lens- fixing apparatus for rimless spectacles according to an embodiment;

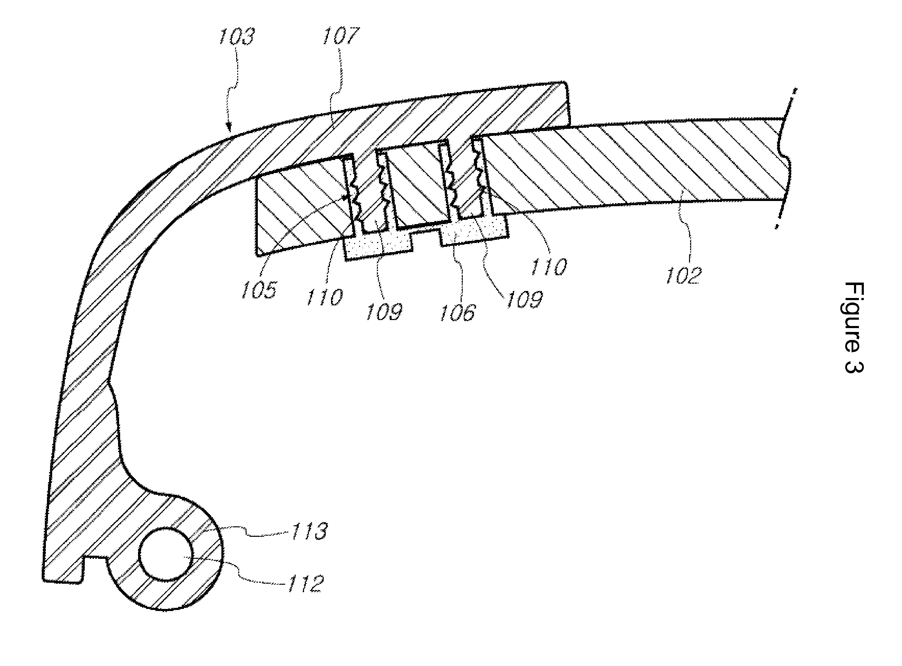

- FIG. 3: is a sectional view illustrating a used state of a lens-fixing apparatus for rimless spectacles according to an embodiment;

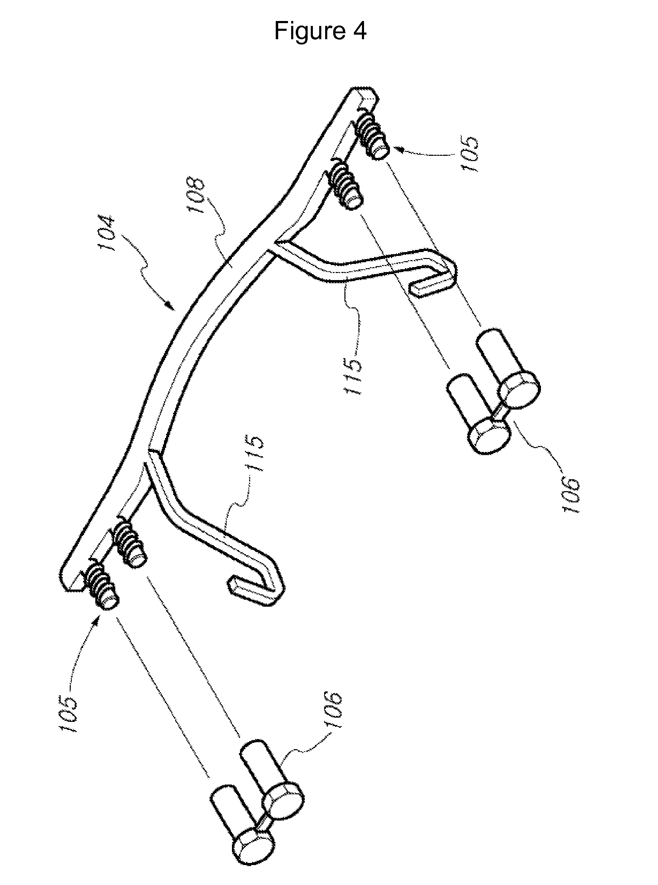

- FIG. 4: is a perspective view of a nose frame-integrated hinge and nut of a lens-fixing apparatus for rimless spectacles according to an embodiment; and

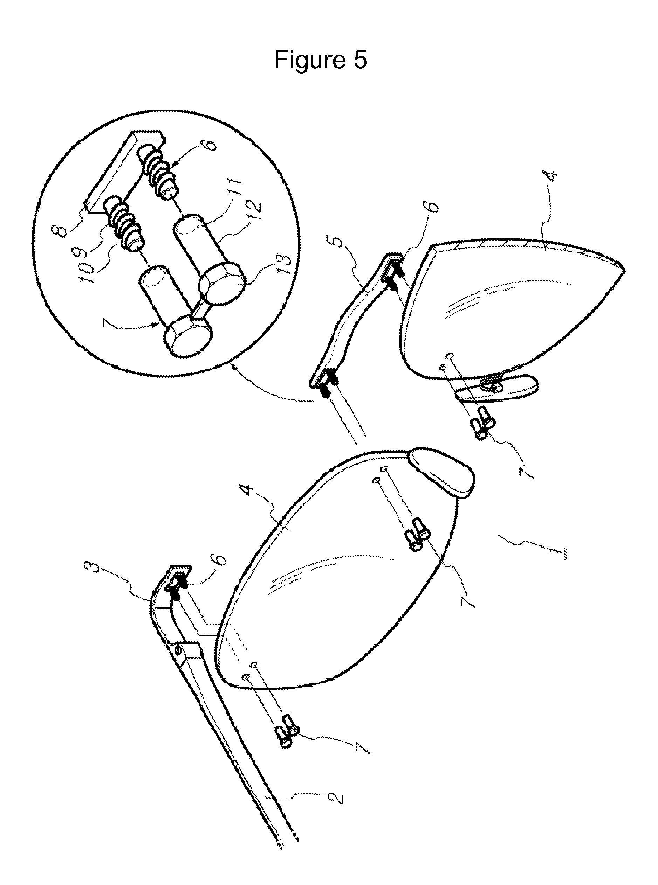

- FIG. 5: is an exploded perspective view of a lens-fixing apparatus for rimless spectacles according to a related art.

### DETAILED DESCRIPTION OF THE INVENTION

A typical lens-fixing apparatus 100 for rimless spectacles includes a hinge 103 having a leg 101 at a rear portion thereof and connected to one side of each of lenses 102 and a bolt and nut for fastening the lens 102 to a nose frame 104 connecting the other side of each of the lenses to each other.

In the lens-fixing apparatus 100 for rimless spectacles according to the present invention, the bolt 105 is integrally formed while a press process is performed on a metal plate to form the hinge 103 and the nose frame 104, thereby reducing the number of ancillary parts management and process for welding the bolt 105 to the hinge 103 and the nose frame 104.

Thus, the manufacture and management costs of the lens-fixing apparatus 100 may be reduced to improve aesthetically pleasing and elegant design, thereby improving the quality of rimless spectacles and strengthening the competitiveness thereof in domestic and global markets.

For this, when the press process is performed using the metal plate, a bolt body 109 having an approximately square or circular shape in section is integrally formed on one or both sides of each of a hinge body 107 and nose frame body 108, which constitute the nose frame 104.

A thread 110 to be coupled to the nut 106 is formed on the bolt body 109 through a post-processing.

In the hinge 103, a connection ring 113 having a pin hole 112 which is coupled to the leg 101 using a hinge pin 111 is integrally formed with the hinge body 107 disposed at a side opposite to that of the bolt 105.

In the nose frame 104, a pair of nose fillers 115 to which nose supports 114 are respectively coupled is integrally formed between the bolts 105 disposed on both sides of the nose frame 104, and then, a bending process is performed.

Although the press process is performed on the metal plate (e.g., stainless steel, aluminum alloy, titanium, copper, etc) to integrally form the bolt 105 and the hinge 103 or the nose frame 104 in the present invention, the present invention is not limited thereto. For example, an injection molding process may be performed using a synthetic resin or a plastic material to integrally form the bolt 105 and the hinge 103 or the nose frame 104.

A used state of the lens-fixing apparatus 100 for rimless spectacles to which the technologies of the present invention are applied will be described below.

The bolt 105 on which the hinge 103 and the nose frame 104 are integrally formed is inserted inwardly into each of coupling holes 121 defined in both sides of the lens 102 constituting the rimless spectacles, and then, the nut 106 is screw-coupled to the bolt 105 from the inside of the coupling holes 121 to couple the bolt 105 to the nut 106.

When the bolt 105 and the nut 106 are coupled to each other, the nut 106 is forcibly inserted into the bolt body 109 while the nut 106 is rotated. Thus, the nut 106 may be screw-coupled to the thread 110 formed on the bolt body 109 to maintain a firm coupling force.

Since the coupling of the bolt 105 and the nut 106 is described in detail in Korean Patent Application No. 877762, which is filed by the same inventor of the present invention, their detailed description will be omitted. This application specifically describes effects (advantages) obtained by integrally forming the bolt 105 and the hinge 103 or the nose frame 104.

The hinge- or nose frame-integrated bolt 105 to which the technologies of the present invention are applied forms the bolt 105 integrated with the hinge 103 and the nose frame 104 using a raw material having a thin thickness. Thus, the total weight of the spectacles may be reduced to improve a comfortable wearing sensation and provide aesthetically pleasing and elegant design.

Specifically, since the raw material has a thin thickness, costs of the raw material may be reduced to contribute manufacturing costs. Also, since the bolt 105 and the hinge 103 or the nose frame 104 are not separated from each other, the number of related parts may be reduced. In addition, the parts may be integrated (modulated) to improve part identification and reduce the number of the assembling and producing processes, thereby easily manage the parts.

Also, since the bolt 105 and the hinge 103 are integrated with each other, but are not separated from each other, an additional welding process may be unnecessary. Thus, the number of process may be reduced, and also, thermal conduction between the hinge 103 and the nose frame 104 may not occur to prevent the hinge 103 and the nose frame 104 from being deformed or separated.

According to the present invention, the bolt may be integrated with the hinge and the nose frame, which constitute the spectacles. Thus, a process for fixing the bolt or an ancillary part such as a groove may be unnecessary. Therefore, the present invention may provide the hinge- and nose frame-integrated bolt having the aesthetically pleasing and elegant design. Also, design variability may be high to expand the whole deformation range of the rimless spectacles.

## Claims

1. A lens-fixing apparatus (100) for rimless spectacles comprising:
hinges (103) having legs (101) at the rear portions thereof and which are connected to each lens (102), respectively; and
bolts (105) and nuts (106) for fastening the lenses (102) to a nose frame (104) which interconnects the lenses (102),
wherein each of the bolts (105) has a bolt body (109) that integrally protrudes from one or both sides of a hinge body (107) of the hinge (103), and from one or both sides of a nose frame body (108) of the nose frame (104), and the bolt body (109) is threaded through a post-processing so as to be coupled with the nut (106), thereby fastening the lenses (102) of the rimless spectacles together.

2. The lens-fixing apparatus of claim 1,
wherein the bolt (105) integrated with the hinge (103) or the nose frame (104) is manufactured by pressing a metal plate.

3. The lens-fixing apparatus of claim 1,
wherein a connection ring (113) having a pin hole (112) which is coupled to the leg (101) using a hinge pin (111) is integrally formed on a side opposite to that of the hinge body (107) on which the bolt (105) is disposed.

4. The lens-fixing apparatus of claim 1,
wherein a nose filler (115) to which a nose support (114) is coupled is integrally formed between the bolts (105) disposed on both sides of the nose frame body (108).

5. The lens-fixing apparatus of claim 1,
wherein the hinge (103) or the nose frame (104) comprising the integrated bolt (105) is manufactured by pressing a metal plate.
